# EUROPÄISCHE PATENTSCHRIFT

(11) **EP 1 106 485 B1**
(45) Veröffentlichungstag und Bekanntmachung des Hinweises auf die Patenterteilung: **28.07.2004**
(21) Anmeldenummer: 00124581.0
(22) Anmeldetag: 10.11.2000
(51) Int. Cl.: B62D 25/06, B62D 65/00, B60R 13/02

(54) **Dachmodul für Kraftfahrzeuge**
Roof unit for motor vehicles
Module de toiture de véhicule automobile

(30) Priorität: 11.12.1999 DE 19959809
(43) Veröffentlichungstag der Anmeldung: 13.06.2001
(73) Patentinhaber: ArvinMeritor GmbH, 63128 Dietzenbach (DE)
(72) Erfinder: Grimm, Rainer, Dipl.-Ing., 60599 Frankfurt (DE); Böhm, Horst, Dipl.-Ing., 60599 Frankfurt (DE)
(74) Vertreter: Oppermann, Mark, Dipl.-Ing.

(56) Entgegenhaltungen:
- DE-A- 19 709 016
- US-A- 4 634 196
- US-A- 4 902 068

## Beschreibung

Die Erfindung bezieht sich auf ein Dachmodul für Kraftfahrzeuge, entsprechend dem Oberbegriff des Patentanspruchs 1.

Derartige modulartig einbaufertig vorgefertigte Fahrzeugdächer werden getrennt von der Fahrzeugkarosserie fertiggestellt und erst am Montageband in der Automobilfabrik mit der Fahrzeugkarosserie vereinigt. Insbesondere wegen der erheblichen Verkürzung der Montagezeit am Montageband erfreuen sich solche Fahrzeugdachmodule zunehmender Bedeutung.

Besonders vorteilhaft sind dabei solche Dachmodule, bei denen schon Funktionselemente an der Innenschale des Dachmoduls vormontiert sind. Bei einem bekannten Fahrzeugdach (DE 197 09 016 A1) der im Oberbegriff des Anspruchs 1 angegebenen Ausbildung ist die nach unten umbiegbare untere Schicht der Innenschale an den dafür geeigneten Orten mit vormontierten Funktionselementen, beispielsweise Sonnenblenden und Haltegriffen, versehen. Hierbei sind die Lagerelemente für die Sonnenblenden und die Haltegriffe jeweils als Schwenklagerböcke ausgebildet, die in entsprechende Ausnehmungen in der unteren Schicht, ggf. durch Ausnehmungen im Himmelbezugsmaterial hindurch, eingerastet sind, wodurch eine Vormontage der Sonnenblenden und Haltegriffe an der Innenschale des Dachmoduls ermöglicht wird.

Nach dem Auflegen des Dachmoduls mit der oberen Schicht der Innenschale und der Befestigung der oberen Schicht an dem Karosserierahmen mittels Klebstoff (DE 197 09 016 A1, Fig. 3) bzw. Befestigungsschrauben (DE 197 09 016 A1, Fig. 5) wird der Karosserierahmen mit der unteren Schicht der Innenschale verkleidet, worauf durch die Schwenklagerböcke hindurch Befestigungsschrauben in den vorderen Querholm und die Seitenholme des Karosserierahmens eingeschraubt werden, wodurch die Sonnenblenden bzw. die Haltegriffe und in den Bereichen der Sonnenblenden und Haltegriffe auch die untere Schicht der Innenschale am Karosserierahmen befestigt werden.

Der Erfindung liegt die Aufgabe zugrunde, die Vormontagemöglichkeiten für die Sonnenblenden und die Haltegriffe an der Innenschale sowie die Montage des Dachmoduls an dem Karosserierahmen weiter zu verbessern und zu vereinfachen.

Diese Aufgabe wird erfindungsgemäß durch die Merkmale des Anspruchs 1 gelöst. Vorteilhafte Weiterbildungen gehen aus den Unteransprüchen hervor und sind nachfolgend ebenfalls näher beschrieben.

Durch die erfindungsgemäße Verwendung der Befestigungsschrauben für die Sonnenblenden und die Haltegriffe zur Befestigung nicht nur dieser Funktionselemente und der unteren Schicht der Innenschale an dem Karosserierahmen, sondern zugleich zur Befestigung des gesamten Dachmoduls am Karosserierahmen, werden die Montage des Dachmoduls am Montageband in der Automobilfabrik weiter erheblich vereinfacht und die Montagezeiten erheblich verkürzt.

Im Verfolg des Erfindungsgedankens kann gemäß Anspruch 2 die Vormontage des Dachmoduls noch weitergehend erfolgen, wenn die Befestigungsschrauben schon an den vormontierten Lagerelementen ebenfalls unverlierbar vormontiert sind. Dieses eröffnet die Möglichkeit, schon bei der Herstellung des Dachmoduls die jeweils an den Lagerelementen zu verwendenden, möglicherweise unterschiedlichen Schrauben anzubringen, so daß sie für die spätere Montage des Dachmoduls an der Kraftfahrzeugkarosserie zwar dreh- bzw. schraubbar sind, jedoch nicht in Axialrichtung aus den Lagerelementen herausfallen können.

Durch das im Anspruch 3 angegebene Einschäumen von Buchsenkörpern schon bei dem die Innenschale des Dachmoduls erzeugenden Schäumvorgang werden die Anbringungsstellen für die Sonnenblenden und die Haltegriffe und nach der Montage des Dachmoduls am Karosserierahmen der Abstand zwischen den Lagerelementen und den Holmen des Karosserierahmens festgelegt. Beim Anziehen der Befestigungsschrauben sorgen die Buchsenkörper durch Aufnahme der durch die Zugkräfte der Schrauben hervorgerufenen Reaktionskräfte dafür, daß sich die untere Schicht der Innenschale an den Anbringungsstellen der Lagerelemente für die Sonnenblenden und die Haltegriffe nicht verformt.

Für die Vormontage der Haltegriffe sind entsprechend Anspruch 4 an den die Haltegriffe schwenkbar tragenden Lagerelementen elastische Rastelemente angebracht, die sich auf einfache Weise schnell mit den eingeschäumten Buchsenkörpern verrasten lassen. Die Voranbringung der Befestigungsschrauben erfolgt hierbei vorteilhaft durch unmittelbar an den Lagerelementen vorgesehene Vorrichtungen.

Für die Vormontage der Sonnenblenden sind nach Anspruch 5 die eingeschäumten Buchsenkörper mit Vorrichtungen zum Festhalten der Befestigungsschrauben versehen. Die durch die Lagerelemente der Sonnenblenden hindurchgeführten Befestigungsschrauben halten dabei ihrerseits die vormontierten Lagerelemente mit den daran schwenkbar angebrachten Sonnenblenden.

Die Vorrichtungen zum unverlierbaren Festhalten der vormontierten Befestigungsschrauben sind gemäß Anspruch 6 zweckmäßig einfache Durchtrittsöffnungen in den Lagerelementen der Haltegriffe bzw. an den Buchsenkörpern für die Lagerelemente der Sonnenblenden. Diese Durchtrittsöffnungen sind im Durchmesser kleiner als der Gewindeaußendurchmesser der jeweiligen Befestigungsschraube, so daß die in die Durchtrittsöffnungen klemmend eingesteckten bzw. eingedrehten Befestigungsschrauben nicht abfallen können.

Im weiteren Verfolg des Erfindungsgedankens sind entsprechend Anspruch 7 in die obere Schicht der Innenschale an den Stellen der Befestigungsschrauben Befestigungselemente eingeschäumt. In diese Befestigungselemente sind bei der Montage des Dachmoduls am Karosserierahmen die Befestigungsschrauben nach Hindurchführung durch entsprechend paßgenau angeordnete Öffnungen in den Holmen des Karosserierahmens einschraubbar.

Der für die Sonnenblende in die untere Schicht der Innenschale eingeschäumte Buchsenkörper kann gemäß Anspruch 8 als Drehlager ausgebildet sein, wodurch diese Lagerstelle vorteilhafterweise schon bei dem die Innenschale erzeugenden Schäumvorgang gebildet wird. Eine Lagerbohrung des Buchsenkörpers nimmt dabei einen Drehlagerbolzen auf, mit dem die Sonnenblende außerhalb des Drehlagers schwenkbar verbunden ist. Die Ausbildung der anderen aushängbaren Schwenklagerstelle für jede Sonnenblende ist nicht Gegenstand der vorliegenden Erfindung. Jedenfalls aber sind die Elemente der aushängbaren Schwenklagerstelle ebenfalls an der unteren Schicht der Innenschale befestigt, so daß jede Sonnenblende nach dem Aushängen aus der Schwenklagerstelle mittels des Drehlagers in Richtung der benachbarten Seitenscheibe der Kraftfahrzeugkarosserie verschwenkt werden kann.

Das Drehlager und der Lagerbolzen erlauben auf die im Anspruch 9 angegebene vorteilhafte Weise und von außen nicht sichtbar den elektrischen Anschluß von an den Sonnenblenden angebrachten beleuchteten Kosmetikspiegeln.

Weitere Einzelheiten der Erfindung werden nachfolgend anhand der Ausführungsbeispiele darstellenden Zeichnungen näher erläutert. Darin zeigt:
- Fig. 1: in perspektivischer schematischer Darstellungsweise den Dachbereich eines Personenkraftwagens,
- Fig. 2: den abgebrochenen Schnitt durch das an einem Seitenholm eines Karosserierahmens befestigte Dachmodul im Bereich eines Haltegriffs, entsprechend der Schnittverlaufslinie II-II in Fig. 1,
- Fig. 3: den abgebrochenen Schnitt durch das an einem vorderen Querholm eines Karosserierahmens befestigte Dachmodul im Bereich des Drehlagers einer Sonnenblende, entsprechend der Schnittverlaufslinie III-III in Fig. 1 und
- Fig. 4: einen abgebrochenen der Fig. 3 ähnlichen Schnitt durch eine andere Ausführungsform des Drehlagers.

Das Dachmodul 1 umfaßt zwei in der üblichen Weise nebeneinander angeordnete Sonnenblenden 2 und an jeder seiner beiden Seiten normalerweise zwei hintereinander angeordnete Haltegriffe 3, die sich an bequem erreichbaren Anbringungsorten für die vorn sitzenden und die auf der Rückbank od.dgl. sitzenden Passagiere befinden.

Bei dem gezeigten Ausführungsbeispiel ist die Innenschale 4 des Dachmoduls 1 aus einem Schaumkunststoff geformt, der auf eine starre Dachhaut 5 aufgeschäumt ist. Die starre Dachhaut 5 besteht aus einem tiefgezogenen Metallblech, beispielsweise Aluminiumblech, oder kann aus einer vakuumverformten Kunststoffolie gebildet sein. Die Erfindung ist aber auch bei Dachmodulausführungsformen anwendbar, bei denen keine feste Dachhaut vorgesehen ist. Hierbei besteht das Dachmodul im wesentlichen aus einem harten, schalenförmig und eigensteif geformten Schaumkunststoff mit glatter lackierbarer Außenfläche.

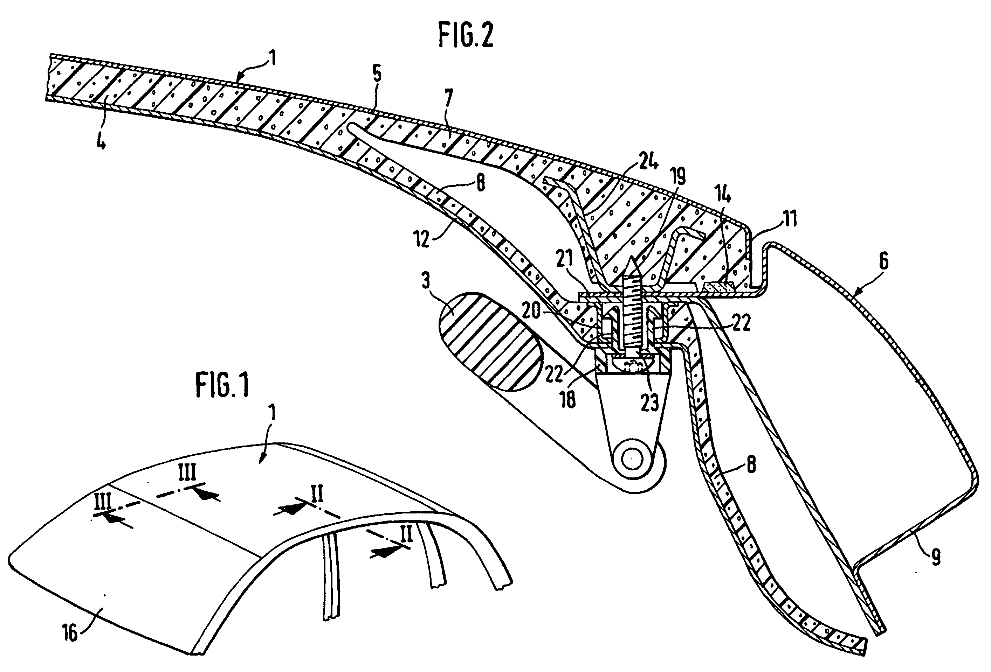

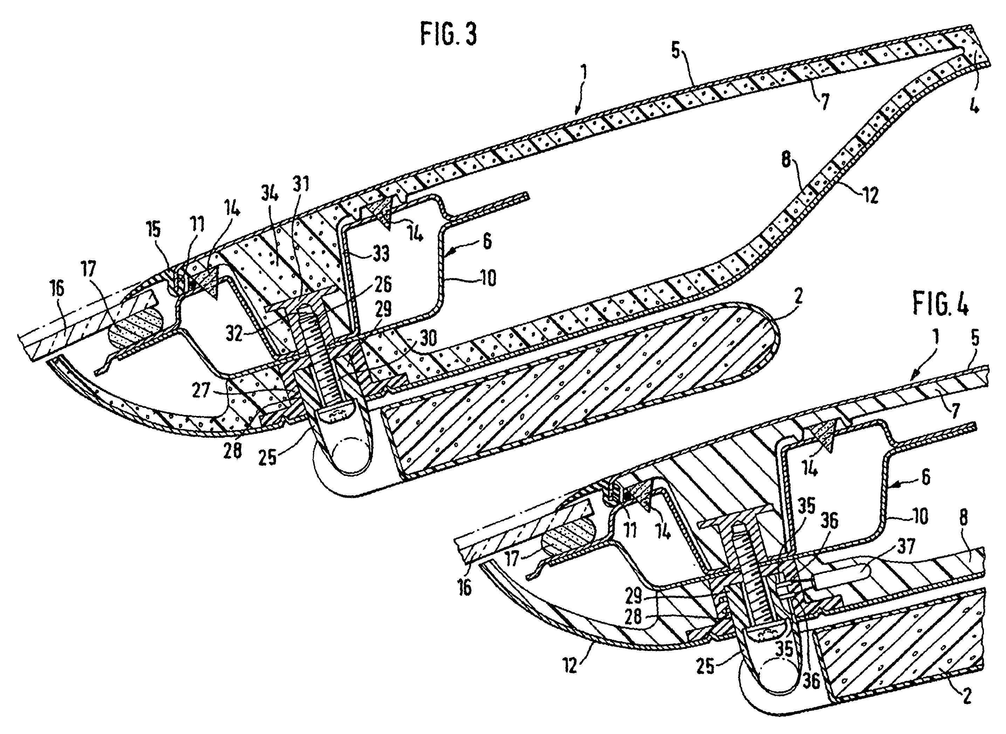

Die Innenschale 4 ist im Bereich der zur Auflage auf den Karosserierahmen 6 vorgesehenen Außenränder in zwei Schichten aufgeteilt, von denen die obere Schicht 7 auf den Karosserierahmen 6 aufgelegt ist, während die untere Schicht 8 über die Außenränder des Fahrzeugdachs übersteht und für den Durchtritt durch die von dem Karosserierahmen 6 begrenzte Karosserieöffnung nach unten ohne bleibende Deformationen umbiegbar ist. Von dem Karosserierahmen 6 ist in Fig. 2 nur einer der beiden Seitenholme 9 und in den Figuren 3 und 4 nur der vordere Querholm 10 dargestellt. Die untere Schicht 8 dient zur Verkleidung des Karosserierahmens 6 und ist im Bereich des vorderen Querholms 10 mit den vormontierten Sonnenblenden 2 und im Bereich der Seitenholme 9 mit den vormontierten Haltegriffen 3 versehen.

Geeignete Werkstoffe für die Innenschale 4 sind Hartschaumkunststoffe auf PUR-Basis, die durch dem Kunststoff vor dem Aufschäumen einverleibte Faserstoffe, beispielsweise Glasfaserabschnitte, armiert sein können. Aber auch in die Schäumform eingelegte Gewebe, Gewirke, Vliese u.dgl. sind als Armierung geeignet. Durch das Aufschäumen der armierten Innenschale 4, deren obere Schicht 7 bis zu einer Randabkantung 11 der Dachhaut 5 reicht, entsteht ein sandwichartiges Verbunddachmodul hoher Formbeständigkeit und Festigkeit. Alle Konturen der Innenschale 4 einschließlich der unteren Schicht 8 und ihrer Profilierungen werden durch entsprechende Formgebung der Schäumform (nicht dargestellt) gebildet.

Die Innenfläche der Innenschale 4 kann zur Ausbildung eines Dachhimmels mit einem textilen oder folienartigen Bezugsmaterial 12 beschichtet sein. Im Bereich der Auflage auf den Karosserierahmen 6 ist die obere Schicht 7 mit umlaufend eingeformten Aufnahmenuten 13 versehen, in welche das Dachmodul 1 gegenüber dem Karosserierahmen 6 abdichtende und partiell auch daran.befestigende Kleberraupen 14 Aufnahme finden, die in den Figuren 3 und 4 nur schematisch angedeutet sind. Auf die vordere Randabkantung 11 (Figuren 3 und 4) ist ein Dichtprofil 15 aufgesteckt und mit angeschäumt, das mit einer nach außen vorspringenden Lippe abdichtend der Außenfläche der Windschutzscheibe 16 anliegt. Zwischen der Windschutzscheibe 16 und einem nach außen vorspringenden Flansch des vorderen Querholms 10 übernimmt eine weitere Kleberraupe 17 die Befestigung und Abdichtung der Windschutzscheibe 16 an bzw. gegenüber der Fahrzeugkarosserie.

Jeder Haltegriff 3 ist schwenkbar an zwei Lagerelementen 18 angebracht, von denen in Fig. 2 nur eines sichtbar ist. Unter Bezugnahme auf Fig. 2 wird daher nachfolgend nur die Befestigungssituation für ein Lagerelement 18 beschrieben. Alle anderen Lagerelemente der Haltegriffe sind entsprechend befestigt.

In die untere Schicht 8 der Innenschale 4 ist an der Stelle der Hindurchführung der Befestigungsschraube 19 ein nach oben offener hutförmiger Buchsenkörper 20, der beispielsweise aus Stahlblech tiefgezogen ist, eingeschäumt. Der Buchsenkörper 20 legt mit seiner Höhe, die der Dicke der unteren Schicht 8 entspricht, den Abstand zwischen dem Lagerelement 18 und der unteren Fläche eines Auflageflansches 21 des Seitenholms 9 fest und verschafft dem Lagerelement 18 beim Anziehen der Befestigungsschraube 19 einen festen Halt am Auflageflansch 21.

An dem beispielsweise aus einem Kunststoff geeigneter Festigkeit spritzgeformten Lagerelement 18 befinden sich mehrere, vorzugsweise damit einteilige, elastisch biegbare Rastelemente 22, die durch eine Bodenöffnung im Buchsenkörper 20 hindurch unter elastischer Biegung eingeführt und nach Durchtritt ihrer hakenartigen Enden durch die Bodenöffnung sich elastisch wieder in die in Fig. 2 gezeigte Lage zurückstellen und damit das Lagerelement 18 mit dem Buchsenkörper 20 verrasten. Auf diese Weise werden die mit den Lagerelementen 18 verbundenen Haltegriffe 3 an der unteren Schicht 8 der Innenschale 4 vormontiert.

Im Lagerelement 18 befindet sich eine Durchtrittsöffnung für die Befestigungsschraube 19, deren Durchmesser kleiner ist als der Gewindeaußendurchmesser der Befestigungsschraube 19. Nach dem Verrasten des Lagerelements 18 in dem Buchsenkörper 20 wird die Befestigungsschraube 19 durch die enge Durchtrittsöffnung hindurch eingeführt, bis sich ein zylindrischer Schaftabschnitt 23, der zwischen dem Schraubenkopf und dem Gewindebereich der Befestigungsschraube 19 vorgesehen ist, in der Durchtrittsöffnung befindet. Die Befestigungsschraube 19, die sich in dieser Position leicht drehen läßt, ist nunmehr ebenfalls an dem Dachmodul 1 unverlierbar vormontiert.

Wie aus Fig. 2 hervorgeht, ist an den Seiten des Dachmoduls 1 in die obere Schicht 7 ein Verstärkungsteil 24 als Befestigungselement für die Befestigungsschrauben 19 in Form eines durchgehenden Profils in den Schaumstoff durch Umschäumen eingebettet, in welches die Befestigungsschrauben 19 einschraubbar sind. Die untere Fläche des Verstärkungsteils 24 liegt dem Auflageflansch 21 des Seitenholms 9 unmittelbar flächig an.

Das Dachmodul 1 wird bei der Anbringung an der Fahrzeugkarosserie so mit den beiderseitigen Verstärkungsteilen 24 auf die Auflageflansche 21 aufgelegt, daß durch in den Auflageflanschen 21 paßgenau angebrachte Montageöffnungen (nicht dargestellt) hindurch die Befestigungsschrauben 19 in die Verstärkungsteile 24 eingeschraubt werden können. Auf diese Weise werden die untere Schicht 8 und die obere Schicht 7 der Innenschale 4 unter Einspannung des Auflageflansches 21 fest miteinander vereinigt, unter gleichzeitiger Befestigung der Haltegriffe 3 an den Seitenholmen 9 des Karosserierahmens 6.

Zur Erläuterung der Anbringung der Sonnenblenden 2 wird nunmehr zunächst auf Fig. 3 Bezug genommen. Gezeigt und beschrieben wird nur die Befestigungssituation für ein Lagerelement 25, das auf noch zu beschreibende Weise als Dreh-/Schwenklager ausgebildet ist. An jeder Sonnenblende 2 befindet sich dieses Lagerelement seitlich außenliegend, während die Sonnenblenden an ihren einander zugekehrten Enden jeweils ein aushängbares Schwenklager besitzen, das ebenfalls an der unteren Schicht 8 der Innenschale 4 vormontiert oder sogar aus dieser gebildet sein kann, jedoch hier nicht gezeigt und beschrieben wird, weil diese aushängbaren Schwenklager der Sonnenblenden nicht zum Bereich der vorliegenden Erfindung gehören.

Auch hier ist in die untere Schicht 8 der Innenschale 4 an der Stelle der Hindurchführung der Befestigungsschraube 26 ein hutförmiger Buchsenkörper 27 eingeschäumt, der in diesem Fall nach unten offen ist. Der Buchsenkörper 27 besitzt zur Bildung des Drehlagers eine Lagerbohrung 28 für die Aufnahme eines am Lagerelement 25 befindlichen Lagerbolzens 29. Der in die Lagerbohrung 28 einschiebbare und darin drehbare Lagerbolzen 29 ist mit einer beidseitig offenen Axialbohrung 30 für das Hindurchführen der zugehörigen Befestigungsschraube 26 versehen. Die Sonnenblende 2 ist außerhalb des Drehlagers mit dem äußeren Ende des Lagerelements 25 schwenkbar verbunden.

Auch in diesem Fall ist die Befestigungsschraube 26 unverlierbar vormontierbar, wobei hier der Buchsenkörper 27 das unverlierbare Festhalten der hindurchgeführten Befestigungsschraube 26 besorgt. Zu diesem Zweck ist der beispielsweise aus einem Kunststoff geeigneter Festigkeit spritzgeformte Buchsenkörper 27 an seinem geschlossenen oberen Ende mit einer engen Durchtrittsöffnung für die zugehörige Befestigungsschraube 26 versehen, deren Durchmesser kleiner ist als der Gewindeaußendurchmesser der Befestigungsschraube 26. Wird daher die Befestigungsschraube 26 in diese enge Durchtrittsöffnung eingesteckt oder eingedreht, wird die Befestigungsschraube 26 unverlierbar am Buchsenkörper 27 vormontiert festgehalten und hält ihrerseits mit ihrem Schraubenkopf das Lagerelement 25 und die daran befindliche Sonnenblende 2 in vormontierter Position an der unteren Schicht 8 der Innenschale 4.

In die obere Schicht 7 der Innenschale 4 ist an der Stelle der Befestigungsschraube 26 ein Befestigungselement 31 eingeschäumt, das eine nach unten offene Gewindebohrung 32 besitzt. Der vordere Querholm 10 besitzt mindestens an der Stelle des Befestigungselements 31 eine nach oben offene Vertiefung 33, die becherförmig oder trogförmig ausgebildet sein kann. Die Vertiefung 33 nimmt eine etwa entsprechend geformte Verdickung 34 der oberen Schicht 7 auf. Das Befestigungselement 31 ist in die Verdickung 34 eingeschäumt. Das Befestigungselement 31 befindet sich paßgenau an der Stelle der Befestigungsschraube 26, die daher durch eine mit der Gewindebohrung 32 fluchtenden Durchgangsöffnung (nicht gezeigt) in der Blechwandung des vorderen Querholms 10 hindurch in die Gewindebohrung 32 nach dem Auflegen der oberen Schicht 7 auf den vorderen Querholm 10 eingeschraubt werden kann. Auf diese Weise wird durch die Befestigungsschraube 26 die obere Schicht 7 fest mit der unteren Schicht 8 unter Zwischenlage der Blechwandung des vorderen Querholms 10 verbunden, wobei zugleich das Lagerelement 25 und die von diesem gehaltene Sonnenblende 2 an dem durch die untere Schicht 8 der Innenschale 4 verkleideten Karosserierahmen 6 montiert werden.

Die in Fig. 4 dargestellte Ausführungsform entspricht im wesentlichen der mit Bezug auf die Fig. 3 beschriebenen. Hierbei sind jedoch für den elektrischen Anschluß eines beleuchteten Kosmetikspiegels (nicht dargestellt) der Sonnenblende 2 am Umfang des Lagerbolzens 29 elektrisch leitende Schleifringe 35 fest angebracht. Die Schleifringe 35 sind mit elektrischen Leitern (nicht dargestellt) verbunden, an welche die Beleuchtungseinrichtung eines an der Sonnenblende 2 befindlichen Kosmetikspiegels angeschlossen ist. Nach Anbringung des Lagerbolzens 29 stehen die Schleifringe 35 in der Lagerbohrung 28 mit Schleifkontakten 36 ständig in Berührung, die bis in die Lagerbohrung 28 des Drehlagers reichen und deren elektrische Zuleitungen 37 in die untere Schicht 8 der Innenschale 4 eingeschäumt sind.

Es wird ein Dachmodul für Kraftfahrzeuge mit einer aus Schaumkunststoff geformten Innenschale vorgeschlagen, die im Bereich ihrer Auflage auf einen Karosserierahmen in eine obere dem Karosserierahmen auflegbare Schicht und eine der Verkleidung des Karosserierahmens dienende untere Schicht unterteilt ist. An der unteren Schicht sind Sonnenblenden und Haltegriffe vormontiert. Zur Verbesserung und Vereinfachung der Montage des Dachmoduls an der Fahrzeugkarosserie ist vorgesehen, daß die obere Schicht und damit das Dachmodul insgesamt nur durch die Befestigungsschrauben für die Sonnenblenden und die Haltegriffe fest mit dem Karosserierahmen verbindbar sind. Vorzugsweise sind auch die Befestigungsschrauben an den Lagerelementen der Sonnenblenden und Haltegriffe schon unverlierbar an der unteren Schicht der Innenschale vormontierbar.

## Patentansprüche

1. Dachmodul für Kraftfahrzeuge, das sandwichartig und an seiner aus Schaumkunststoff geformten Innenschale (4) als Dachhimmel ausgebildet, getrennt von der Fahrzeugkarosserie hergestellt, mit seinen Außenrändern auf einen Karosserierahmen (6) auflegbar und mit diesem fest verbindbar ist, wobei die Innenschale (4) im Bereich ihrer zur Auflage auf den Karosserierahmen (6) vorgesehenen Außenränder in zwei Schichten (7, 8) aufgeteilt ist, von denen die obere Schicht (7) auf den Karosserierahmen (6) auflegbar ist, während die untere Schicht (8) nach unten umbiegbar und zur Verkleidung des Karosserierahmens (6) ausgebildet ist, wobei weiterhin die untere Schicht (8) im Bereich des vorderen Querholms (10) des Karosserierahmens (6) mit vormontierten Sonnenblenden (2) und im Bereich der Seitenholme (9) des Karosserierahmens (6) mit vormontierten Haltegriffen (3) versehen ist, welche Sonnenblenden (2) und Haltegriffe (3) schwenkbar an Lagerelementen (25, 18) angebracht sind, die mit der unteren Schicht (8) verbunden sind, wobei durch die Lagerelemente (25, 18) Befestigungsschrauben (26, 19) hindurchführbar sind, die in den vorderen Querholm (10) bzw. die Seitenholme (9) des Karosserierahmens (6) eingreifen und welche die Lagerelemente (25, 18) und die untere Schicht (8) am Karosserierahmen (6) befestigen, **dadurch gekennzeichnet, daß** auch die obere Schicht (7) der Innenschale (4) und damit das Dachmodul (1) insgesamt durch die Befestigungsschrauben (26, 19) für die Sonnenblenden (2) und die Haltegriffe (3) fest mit dem Karosserierahmen (6) verbindbar ist.

2. Dachmodul nach Anspruch 1, **dadurch gekennzeichnet, daß** die Befestigungsschrauben (26, 19) an den Lagerelementen (25, 18) der Sonnenblenden (2) und Haltegriffe (3) unverlierbar vormontierbar sind.

3. Dachmodul nach Anspruch 1 oder 2, **dadurch gekennzeichnet, daß** in die untere Schicht (8) der Innenschale (4) an den Stellen der Hindurchführung der Befestigungsschrauben (26, 19) Buchsenkörper (27, 20) eingeschäumt sind, durch welche der Abstand zwischen den Lagerelementen (25, 18) der Sonnenblenden (2) bzw. der Haltegriffe (3) und dem jeweiligen Holm (10, 9) des Karosserierahmens (6) festgelegt ist.

4. Dachmodul nach den Ansprüchen 1 bis 3, **dadurch gekennzeichnet, daß** an den Lagerelementen (18) für die Haltegriffe (3) elastisch biegbare Rastelemente (22) angebracht sind, die mit den eingeschäumten Buchsenkörpern (20) verrastbar sind, und daß die Lagerelemente (18) für die Haltegriffe (3) jeweils eine Vorrichtung zum unverlierbaren Festhalten hindurchgeführter Befestigungsschrauben (19) besitzen.

5. Dachmodul nach den Ansprüchen 1 bis 3, **dadurch gekennzeichnet, daß** die Buchsenkörper (27) für die Anbringung von Lagerelementen (25) der Sonnenblenden (2) jeweils eine Vorrichtung zum unverlierbaren Festhalten hindurchgeführter Befestigungsschrauben (26) besitzen.

6. Dachmodul nach Anspruch 4 oder 5, **dadurch gekennzeichnet, daß** die Vorrichtung eine Durchtrittsöffnung für die zugehörige Befestigungsschraube (19, 26) ist, deren Durchmesser kleiner ist als der Gewindeaußendurchmesser der Befestigungsschraube (19, 26).

7. Dachmodul nach einem der Ansprüche 1 bis 6, **dadurch gekennzeichnet, daß** in die obere Schicht (7) der Innenschale (4) an den Stellen der Befestigungsschrauben (19, 26) Befestigungselemente (24, 31) eingeschäumt sind, in welche die Befestigungsschrauben (19, 26) einschraubbar sind.

8. Dachmodul nach den Ansprüchen 1 bis 3 und 5 bis 7, **dadurch gekennzeichnet, daß** für jede Sonnenblende (2) der in die untere Schicht (8) der Innenschale (4) eingeschäumte Buchsenkörper (27) zur Bildung eines Drehlagers eine Lagerbohrung (28) für die Aufnahme eines am Lagerelement (25) angebrachten Lagerbolzens (29) besitzt, der mit einer beidseitig offenen Axialbohrung (30) für das Hindurchführen der zugehörigen Befestigungsschraube (26) versehen ist, und daß die Sonnenblende (2) außerhalb des Drehlagers mit dem Lagerelement (25) schwenkbar verbunden ist.

9. Dachmodul nach Anspruch 8, **dadurch gekennzeichnet, daß** am Umfang des Lagerbolzens (29) elektrisch leitende Schleifringe (35) fest angebracht sind, die mit elektrischen Leitern verbunden sind, an welche die Beleuchtungseinrichtung eines an der Sonnenblende (2) befindlichen Kosmetikspiegels angeschlossen ist, wobei die Schleifringe (35) nach Anbringung des Lagerbolzens (29) in dem Drehlager mit Schleifkontakten (36) in Berührung stehen, die bis in die Lagerbohrung (28) des Drehlagers reichen und deren elektrische Zuleitungen (37) in die Innenschale (4) eingeschäumt sind.

## Claims

1. Roof module for motor vehicles, of sandwich construction, which is formed as an interior roof lining at its inner shell (4) which is molded out of plastic foam, manufactured separately from the vehicle body, the outer edges of which can be supported on the body framework (6) and be securely fixed to it, wherein the inner shell (4) is divided into two layers (7, 8) in the area of its outer edges intended to be supported on the body framework (6), of which the upper layer (7) can be supported on the body framework (6), whilst the lower layer (8) can be bent down and is designed to line the body framework (6), wherein the lower layer (8) is further furnished with pre-assembled sun visors (2) in the area of the front cross member (10) of the body framework (6) and pre-assembled handholds (3) in the area of the side members (9) of the body framework (6), the sun visors (2) and the handholds (3) being pivoted on bearing elements (25, 18) which are connected to the lower layer (8), wherein fixing screws (26, 19) can be fed through the bearing elements (25, 18) to catch in the front cross member (10) and the side members (9), respectively, of the body framework (6) and which secure the bearing elements (25, 18) and the lower layer (8) on the body framework (6), **characterized in that** the upper layer (7) of the inner shell (4) as well, and thus the roof module (1) as a whole, can be securely fixed to the body framework (6) by means of the fixing screws (26, 19) for the sun visors (2) and the handholds (3).

2. Roof module according to Claim 1, **characterized in that** the fixing screws (26, 19) can be pre-assembled on the bearing elements (25, 18) of the sun visors (2) and the handholds (3) in a captive manner.

3. Roof module according to Claim 1 or 2, **characterized in that** sleeve bushes (27, 20) are foamed into the lower layer (8) of the inner shell (4) at the points where the fixing screws (26, 19) are fed through, by means of which sleeve bushes the distance between the bearing elements (25, 18) of the sun visors (2) and the handholds (3), respectively, and the relevant member (10, 9) of the body framework (6) is set.

4. Roof module according to Claims 1 to 3, **characterized in that** bendable, elastic snap-in elements (22) which can be locked in place with the foamed-in sleeve bushes (20) are mounted on the bearing elements (18) for the handholds (3) and **in that** the bearing elements (18) for the handholds (3) each possess a device to captivate the fixing screws (19) already fed through.

5. Roof module according to Claims 1 to 3, **characterized in that** the sleeve bushes (27) for the mounting of bearing elements (25) of the sun visors (2) each possess a device to captivate the fixing screws (26) already fed through.

6. Roof module according to Claim 4 or 5, **characterized in that** the device is a penetration hole for the associated fixing screw (19, 26), the diameter of which is less than the outer diameter of the thread of the fixing screw (19, 26).

7. Roof module according to one of the Claims 1 to 6, **characterized in that** fixing elements (24, 31) into which the fixing screws (19, 26) can be screwed are foamed into the upper layer (7) of the inner shell (4) at the points of the fixing screws (19, 26).

8. Roof module according to Claims 1 to 3 and 5 to 7, **characterized in that**, for each sun visor (2), the sleeve bush (27) foamed into the lower layer (8) of the inner shell (4) possesses a bearing bore (28) to accommodate a bearing pin (29) mounted on the bearing element (25), for forming a pivot bearing, which bearing pin is furnished with an axial borehole (30) open to both sides for feeding through the associated fixing screw (26), and **in that** the sun visor (2) is pivoted on the bearing element (25) outside of the pivot bearing.

9. Roof module according to Claim 8, **characterized in that** electrically conductive slip rings (35) are securely fitted at the circumference of the bearing pin (29) and are electrically connected to electrical conductors, to which the lighting device of a vanity mirror located on the sun visor (2) is connected, wherein, after the bearing pin (29) has been fitted in the pivot bearing, the slip rings (35) are in contact with sliding contacts (36) which extend into the bearing bore (28) of the pivot bearing and the electrical leads (37) of which are foamed into the inner shell (4).

## Revendications

1. Module de toiture pour véhicules automobiles, qui est réalisé en forme de sandwich et, à titre d'habillage de plafond sur sa coque intérieure (4) conformée en mousse de matière plastique, fabriqué séparément de la carrosserie de véhicule, susceptible d'être posé par ses bords extérieurs sur un cadre de carrosserie (6) et d'être relié solidairement à celui-ci, la coque intérieure (4) étant subdivisée en deux couches (7, 8) dans la zone de ses bords extérieurs prévus pour venir se poser sur le cadre de carrosserie (6), parmi lesquelles la couche supérieure (7) est susceptible d'être posée sur le cadre de carrosserie (6) tandis que la couche inférieure (8) est susceptible d'être repliée vers le bas et est réalisée pour habiller le cadre de carrosserie (6), la couche inférieure (8) étant pourvue de pare-soleil prémontés (2) dans la zone du longeron transversal avant (10) du cadre de carrosserie (6) et de poignées de retenue prémontées (3) dans la zone des longerons latéraux (9) du cadre de carrosserie (6), les pare-soleil (2) et les poignées de retenue (3) étant agencés mobiles en pivotement sur des éléments de montage (25, 18) qui sont reliés à la couche inférieure (8), des vis de fixation (26, 19) pouvant être menées à travers les éléments de montage (25, 18), qui s'engagent dans le longeron transversal avant (10) ou dans les longerons latéraux (9) du cadre de carrosserie (6) et qui fixent les éléments de montage (25, 18) et la couche inférieure (8) sur le cadre de carrosserie (6), **caractérisé en ce que** la couche supérieure (7) de la coque intérieure (4) et ainsi le module de toiture (1) dans son ensemble peuvent également être reliés solidairement au cadre de carrosserie (6) par les vis de fixation (26, 19) pour les pare-soleil (2) et pour les poignées de retenue (3).

2. Module de toiture selon la revendication 1, **caractérisé en ce que** les vis de fixation (26, 19) sont susceptibles d'être prémontées de façon imperdable sur les éléments de montage (25, 18) des pare-soleil (2) et des poignées de retenue (3).

3. Module de toiture selon l'une ou l'autre des revendications 1 et 2, **caractérisé en ce que** des corps formant douille (27, 20) sont intégrés par moussage dans la couche inférieure (8) de la coque intérieure (4) aux emplacements du passage des vis de fixation (26, 19), corps qui imposent la distance entre les éléments de montage (25, 18) des pare-soleil (2) ou des poignées de retenue (3) et le longeron respectif (10, 9) du cadre de carrosserie (6).

4. Module de toiture selon les revendications 1 à 3, **caractérisé en ce que** des éléments d'enclenchement (22) élastiquement flexibles sont agencés sur les éléments de montage (18) pour les poignées de retenue (3), qui sont susceptibles d'être enclenchés avec les corps formant douille (20) intégrés par moussage, et **en ce que** les éléments de montage (18) pour les poignées de retenue (3) possèdent chacun un dispositif pour retenir de façon imperdable des vis de fixation engagées (19).

5. Module de toiture selon les revendications 1 à 3, **caractérisé en ce que** les corps formant douille (27) pour agencer des éléments de montage (25) des pare-soleil (2) possèdent chacun un dispositif pour retenir de façon imperdable des vis de fixation engagées (26).

6. Module de toiture selon l'une ou l'autre des revendications 4 et 5, **caractérisé en ce que** le dispositif est une ouverture de passage pour la vis de fixation associée (19, 26), dont le diamètre est inférieur au diamètre extérieur du filetage de la vis de fixation (19, 26).

7. Module de toiture selon l'une des revendications 1 à 6, **caractérisé en ce que** des éléments de fixation (24, 31) sont susceptibles d'être intégrés par moussage dans la couche supérieure (7) de la coque intérieure (4) aux emplacements des vis de fixation (19, 26), éléments dans lesquels peuvent être vissées les vis de fixation (19, 26).

8. Module de toiture selon l'une des revendications 1 à 3 et 5 à 7, **caractérisé en ce que** pour chaque pare-soleil (2), le corps formant douille (27) intégré par moussage dans la couche inférieure (8) de la coque intérieure (4) possède un perçage de montage (28) pour recevoir un goujon de montage (29) agencé sur l'élément de montage (25), afin de former un palier rotatif, goujon qui est pourvu d'un perçage axial (30) ouvert de part et d'autre pour faire passer la vis de fixation associée (26), et **en ce que** le pare-soleil (2) est relié avec faculté de pivotement à l'élément de montage (25) à l'extérieur du palier rotatif.

9. Module de toiture selon la revendication 8, **caractérisé en ce que** des bagues collectrices (35) électriquement conductrices sont agencées solidairement à la périphérie du goujon de montage (29), qui sont connectées à des conducteurs électriques auxquels est branché le dispositif d'éclairage d'un miroir de courtoisie situé sur le pare-soleil (2), les bagues collectrices (35) étant en contact avec des contacts frotteurs (36), une fois que le goujon de montage (29) est agencé dans le palier rotatif, contacts qui s'étendent jusque dans le perçage de montage (28) du palier rotatif et dont les lignes d'alimentation électriques (37) sont intégrées par moussage dans la coque intérieure (4).
